# FASCICULE DE BREVET EUROPEEN

(11) **EP 3 000 986 B1**
(45) Date de publication et mention de la délivrance du brevet: **05.07.2017**
(21) Numéro de dépôt: 15182636.9
(22) Date de dépôt: 27.08.2015
(51) Int. Cl.: F01D 21/02, F02C 3/10, F02C 9/28, F02C 9/46

(54) **PROCÉDÉ POUR ARRÊTER UN MOTEUR DE GIRAVION EN SURVITESSE ET GIRAVION ASSOCIÉ**
VERFAHREN ZUM ANHALTEN EINES MOTORS EINES DREHFLÜGELFLUGZEUGS BEIM ÜBERDREHEN UND EIN ENTSPRECHENDES DREHFLÜGELFLUGZEUG
A METHOD OF STOPPING A ROTORCRAFT ENGINE IN OVERSPEED AND A ROTORCRAFT ASSOCIATED THEREWITH

(30) Priorité: 26.09.2014 FR 1402171
(43) Date de publication de la demande: 30.03.2016
(73) Titulaire: Airbus Helicopters, 13725 Marignane Cedex (FR)
(72) Inventeur: CERTAIN, Bernard, 13090 AIX EN PROVENCE (FR)
(74) Mandataire: Pouillot, Laurent Pierre Paul

(56) Documents cités:
- EP-A1- 2 570 617
- WO-A1-93/04418
- US-A- 4 625 510
- US-A- 5 775 089

## Description

La présente invention concerne un procédé pour arrêter un moteur en survitesse, un tel système de sécurité en survitesse et un aéronef muni de ce système de sécurité en survitesse.

L'invention se rapporte au domaine technique général des systèmes assurant la sécurité de fonctionnement des moteurs d'un aéronef, et notamment la sécurité de fonctionnement d'un turbomoteur d'un giravion.

La présente invention concerne plus particulièrement une protection d'une installation motrice en cas de survitesse d'un moteur.

Un giravion inclut au moins un moteur pour mettre en rotation au moins un rotor. Un tel rotor assure au moins partiellement la sustentation de ce giravion, voire sa propulsion. Par exemple, un giravion bimoteur inclut un premier moteur et un deuxième moteur entraînant conjointement un rotor principal de sustentation et/ou de propulsion par une chaîne de transmission de puissance.

Le premier moteur et le deuxième moteur sont généralement contrôlés respectivement par une première unité de contrôle et une deuxième unité de contrôle. De telles unités de contrôle sont dénommées « Full Authority Digital Engine Control » en langue anglaise ou plus simplement « FADEC ».

Chaque unité de contrôle peut comprendre un calculateur et des unités périphériques de commande et de contrôle s'interfaçant entre le cockpit et le moteur associé de l'aéronef.

Les moteurs peuvent être des turbomoteurs.

Un turbomoteur comporte classiquement un générateur de gaz. Le générateur de gaz comporte successivement au moins un compresseur, une chambre de combustion et au moins une turbine de détente, le compresseur étant lié mécaniquement à la turbine de détente par un arbre moteur.

De plus, le turbomoteur comporte un ensemble de puissance situé en aval du générateur de gaz. Cet ensemble de puissance est parfois muni d'au moins une turbine de puissance mise rotation par les gaz sortant du générateur de gaz. Cette turbine de puissance met en rotation un arbre de travail engrenant la chaîne de transmission de puissance qui est reliée à un rotor.

La turbine de puissance est qualifiée de « libre » lorsque cette turbine n'est pas reliée par un arbre au générateur de gaz.

En cas de rupture de la chaîne de transmission de puissance ou de glissement d'une roue libre de cette chaîne de transmission notamment, la vitesse de rotation de la turbine de puissance d'un turbomoteur peut augmenter considérablement. A partir d'un seuil, l'homme du métier considère alors qu'un tel turbomoteur est en survitesse, une telle survitesse pouvant conduire à un emballement de la vitesse de rotation et à un éclatement du moteur.

Par suite, les aéronefs sont généralement munis de systèmes de sécurité pour tenter de limiter l'impact d'une telle survitesse sur l'aéronef et ses occupants.

Un système mécanique dénommé « blade shedding » en langue anglaise est parfois utilisé sur un turbomoteur à turbine libre.

Ce système mécanique comprend un anneau de blindage agencé autour de la turbine libre. De plus, chaque aube de la turbine libre est fixée à un moyeu par un élément fusible.

Au-delà d'une vitesse de rotation seuil, les éléments fusibles rompent. Chaque aube est alors désolidarisée du moyeu. Toutefois, ces aubes restent contenues dans le moteur grâce au blindage.

L'éjection des aubes de la turbine libre induit de fait une diminution de la vitesse de rotation de cette turbine libre, et permet ainsi de stopper la survitesse de la turbine libre.

Néanmoins, le moteur est de fait partiellement détruit suite à l'éjection des aubes. En outre, l'arrêt de la rotation d'une turbine libre n'induit pas nécessairement l'arrêt du générateur de gaz du moteur.

Par suite, un système électronique de coupure peut être implémenté pour arrêter les turbomoteurs afin d'éviter l'apparition d'une survitesse.

Le constructeur d'un turbomoteur établit alors par exemple un seuil de vitesse de rotation de la turbine libre de ce turbomoteur. Lorsque ce seuil est atteint, l'unité de contrôle arrête le moteur. Dans cette configuration, le moteur n'est pas endommagé par le système de sécurité.

Le document FR 2962165 suggère de comparer uniquement le couple moteur transmis par une turbine libre à un seuil de couple.

Néanmoins, l'utilisation d'un unique seuil de surveillance de vitesse ou de couple peut induire des coupures intempestives du moteur, par exemple lorsque le giravion effectue une manoeuvre sévère. Dès lors, ce système de surveillance n'est parfois pas agencé sur un aéronef monomoteur.

Sur un giravion bimoteur, la coupure d'un moteur peut être inhibée en cas de coupure par survitesse de l'autre moteur pour éviter la coupure intempestive des deux moteurs. Après la coupure d'un premier moteur, l'arrêt en vol du deuxième moteur n'est alors plus autorisé.

Dans un tel cas de figure, le deuxième moteur ne peut cependant pas être arrêté en cas de survitesse. Une telle situation est improbable mais néanmoins possible. En conséquence, si le second moteur se trouve par la suite en condition de survitesse, ce deuxième moteur ne pourra pas être arrêté automatiquement puisque sa protection est inhibée. Le deuxième moteur risque donc d'être dans une situation de survitesse.

Selon une variante, un pilote peut alors réarmer manuellement un système de protection électronique contre la survitesse du deuxième moteur pour éviter une telle situation.

Dans ce contexte, le turbomoteur d'un giravion monomoteur est parfois équipé d'un système mécanique de protection de type « blade shedding ».

Par contre, un giravion monomoteur n'est généralement pas équipé d'un système électronique pour éviter une coupure intempestive du seul moteur de l'aéronef.

Les giravions bimoteur peuvent par contre comprendre un système mécanique de protection de type « blade shedding » par moteur, et un système électronique de coupure.

Par ailleurs, l'arrière plan technologique comporte un dispositif de protection qui met à l'arrêt un moteur en survitesse sous condition d'une comparaison entre une puissance mécanique requise par le giravion et un seuil de puissance prédéfini. La puissance mécanique requise par le giravion est calculée selon au moins la valeur courante ou anticipée du couple résistant d'un rotor principal du giravion.

Le document FR 2 967 213 décrit un procédé de commande pour piloter un système de sécurité de survitesse d'un aéronef comportant au moins deux moteurs. Ce procédé consiste à armer le système de sécurité de survitesse des moteurs, à surveiller le régime de rotation des moteurs, à détecter une survitesse sur l'un des moteurs, à couper le moteur en question en cas d'une telle détection et à inhiber le fonctionnement du système de sécurité de survitesse pour le ou les autres moteurs restant en fonctionnement. Les systèmes de sécurité de survitesse des moteurs restant en fonctionnement peuvent être réarmés en fonction d'un ou plusieurs paramètres de sécurité.

Le document FR 2 980 174 et le document EP2570617 décrivent un procédé de commande pour commander un système de sécurité de survitesse d'un aéronef comportant au moins deux moteurs. Selon ce procédé, un premier moteur est coupé lorsqu'un paramètre de surveillance de ce premier moteur dépasse un premier seuil et un deuxième moteur distinct de ce premier moteur est coupé lorsque le paramètre de surveillance de ce deuxième moteur dépasse un deuxième seuil, le deuxième seuil étant supérieur audit premier seuil.

Notamment, le paramètre de surveillance est la vitesse de rotation de la turbine libre d'un turbomoteur.

Les documents US4625510, WO 93/04418 et US 5775089 sont éloignés de l'invention.

La présente invention vise alors un procédé alternatif pour d'une part éviter l'éclatement des moteurs d'un aéronef suite à une survitesse des moteurs, et d'autre part limiter les risques d'apparition d'une coupure intempestive.

L'invention vise ainsi un procédé pour arrêter un moteur de giravion en survitesse, ce giravion comprenant au moins un moteur, le moteur comprenant un générateur de gaz et un ensemble de puissance, l'ensemble de puissance ayant au moins une turbine de puissance mise en rotation par des gaz provenant du générateur de gaz, l'ensemble de puissance ayant au moins un arbre de puissance solidaire en rotation de la turbine de puissance.

Lorsque le moteur est en fonctionnement, on arrête automatiquement ce moteur lorsque les trois conditions suivantes sont simultanément remplies :
- un couple mesuré sur l'ensemble de puissance est inférieur à un seuil de couple prédéterminé, et
- une vitesse de rotation dite « première vitesse de rotation » du générateur de gaz est supérieure à un seuil dit « premier seuil de vitesse », et
- une vitesse de rotation dite « deuxième vitesse de rotation » de l'ensemble de puissance est supérieure à un seuil dit « deuxième seuil de vitesse ».

Contrairement à un état de la technique suggérant l'utilisation d'une unique condition pour arrêter un moteur, l'invention vérifie la présence simultanée de trois conditions différentes.

Ces trois conditions se produisent simultanément dans des situations rares, résultant par exemple de la rupture de la chaîne de transmission de puissance reliant le moteur à un rotor.

En effet, dans ces conditions, la première vitesse de rotation du générateur de gaz est élevée. De plus, la deuxième vitesse de rotation de la turbine de puissance augmente rapidement en raison d'un couple résistant qui tend vers zéro.

En outre, une rupture de la chaîne de transmission induit de fait la présence d'un couple faible voire nul sur l'ensemble de puissance.

Dès lors, ce procédé propose non pas de vérifier une unique condition, mais de vérifier que trois conditions sont remplies. Si ces trois conditions sont toutes vérifiées, le moteur concerné est arrêté automatiquement.

La mise en place des trois conditions revendiquées au lieu d'une condition permet d'éviter une coupure intempestive résultant par exemple d'une manoeuvre sévère du giravion.

Dès lors, ce procédé peut être implémenté aussi bien sur un giravion bimoteur que sur un giravion monomoteur.

Sur un giravion monomoteur, une protection de type « blade shedding » est intéressante pour éviter l'éclatement du moteur en survitesse. Toutefois, le carter du moteur peut être éventré suite à des déformations de l'anneau du système de protection de type « blade shedding » ou suite à un crash. Le générateur de gaz restant en fonctionnement, des gaz chauds peuvent s'échapper du moteur par les orifices générés par cette éventration, et risquent d'enflammer de l'huile ou du carburant par exemple.

Le procédé revendiqué permet de couper le moteur lorsqu'une survitesse est provoquée par une rupture de la chaîne de transmission de puissance. Dès lors, le générateur de gaz est arrêté ce qui peut tendre à réduire les risques de feu postérieurs à un crash par exemple.

Sur un giravion bimoteur, le procédé peut tendre à limiter les risques de coupure indue d'un moteur. Les trois critères mis en place sont effectivement remplis dans des situations rares résultant de la rupture de la chaîne de transmission, suite à un crash notamment. Dès lors, le giravion peut être dépourvu d'un système d'inhibition croisée susceptible dans de rares cas de maintenir en fonctionnement un moteur en survitesse.

Ce procédé peut de plus comporter une ou plusieurs des caractéristiques qui suivent.

Ainsi, le générateur de gaz étant alimenté par un doseur de carburant, ledit doseur pouvant être réglé entre une butée minimale induisant un débit minimal de carburant et une butée maximale induisant un débit maximal de carburant, on arrête automatiquement ledit moteur en réglant le doseur de carburant du moteur sur sa butée minimale.

A cet effet, le doseur peut être réglé pour atteindre sa butée de débit minimal quand les trois conditions précédentes sont simultanément réalisées.

Alternativement ou en complément, au moins un moteur comprenant un robinet sur une conduite de carburant, on coupe automatiquement ce moteur en fermant le robinet.

Par ailleurs, chaque moteur étant alimenté en carburant par au moins une pompe, on coupe la pompe lorsque les trois conditions précédentes sont simultanément remplies.

Par exemple, une pompe de gavage agencée dans un réservoir de carburant est mise à l'arrêt pour éviter de répandre du carburant en cas de rupture d'une tuyauterie de carburant.

Par ailleurs, on peut mesurer le couple, transmis par l'ensemble de puissance, en agençant un système de mesure d'un couple sur l'arbre de puissance. L'invention vise en outre un giravion comportant au moins un système de sécurité en survitesse pour un moteur de giravion, ce moteur comprenant un générateur de gaz et un ensemble de puissance, l'ensemble de puissance ayant au moins une turbine de puissance mise en rotation par le générateur de gaz, l'ensemble de puissance ayant au moins un arbre de puissance solidaire en rotation de la turbine de puissance, le système de sécurité en survitesse comprenant un système de coupure pour arrêter le fonctionnement du moteur, le système de sécurité en survitesse comprenant une unité de traitement reliée au système de coupure.

Ce système de sécurité en survitesse comprend un capteur de vitesse dit « premier capteur de vitesse » pour mesurer une vitesse de rotation dite « première vitesse de rotation » du générateur de gaz, le système de sécurité en survitesse comportant un capteur de vitesse dit « deuxième capteur de vitesse » pour mesurer une vitesse de rotation dite « deuxième vitesse de rotation » de l'ensemble de puissance, le système de sécurité en survitesse comportant un système de mesure d'un couple pour mesurer un couple transmis par l'ensemble de puissance, l'unité de traitement étant reliée au premier capteur de vitesse ainsi qu'au deuxième capteur de vitesse et au système de mesure d'un couple et étant configurée pour mettre en oeuvre le procédé décrit précédemment en arrêtant automatiquement le moteur lorsque les trois conditions suivantes sont simultanément remplies :
- un couple transmis par l'ensemble de puissance est inférieur à un seuil de couple prédéterminé, et
- une vitesse de rotation dite « première vitesse de rotation » dudit générateur de gaz est supérieure à un seuil dit « premier seuil de vitesse », et
- une vitesse de rotation dite « deuxième vitesse de rotation » dudit ensemble de puissance est supérieure à un seuil dit « deuxième seuil de vitesse ».

Chaque capteur de vitesse comporte par exemple un capteur électromagnétique placé en face d'une roue phonique solidaire en rotation de l'organe rotatif dont on souhaite mesurer la vitesse de rotation.

Classiquement, une roue phonique est munie d'une zone périphérique comportant des dents réparties circonférentiellement. Le passage des dents de la roue phonique devant le capteur électromagnétique modifie le champ magnétique produit et induit un courant alternatif dans une bobine du capteur électromagnétique dont la fréquence est proportionnelle à la vitesse de rotation.

Le système de mesure d'un couple peut comprendre un couplemètre hydraulique ou pneumatique ou de torsion.

Le système de mesure d'un couple peut aussi comprendre un couplemètre à jauges de contrainte ou muni d'au moins une roue phonique.

Par exemple, un couplemètre comporte deux roues phoniques placées de part et d'autre d'une partie flexible en torsion d'un arbre, notamment l'arbre de puissance. Les deux roues phoniques présentent un déphasage de référence en l'absence de couple exercé sur l'ensemble de puissance. Dès lors, le déphasage entre les deux roues phoniques par rapport au déphasage de référence est évalué pour déterminer le couple exercé sur l'arbre de puissance, et donc transmis par cet arbre de puissance.

Par ailleurs, le système de coupure peut comporter un doseur de carburant acheminant du carburant vers le générateur de gaz.

Ce système de coupure peut aussi comporter au moins une pompe acheminant du carburant vers le générateur de gaz.

Par ailleurs, l'unité de traitement peut comporter un circuit logique ou équivalent, ou encore un moyen de calcul de type processeur ou équivalent qui exécute des instructions mémorisées dans une mémoire.

En particulier, l'unité de traitement peut être un FADEC du moteur. Pour mémoire, un FADEC représente l'unité de contrôle d'un turbomoteur, cette unité de contrôle étant dénommée « Full Authority Digital Engine Control » en langue anglaise.

En outre, le système de sécurité en survitesse peut comporter un anneau de blindage entourant ladite turbine de puissance, ladite turbine de puissance comportant une pluralité d'aubes, chaque aube étant fixée à un organe fusible.

Le système de sécurité en survitesse est alors muni d'un système électronique arrêtant automatiquement le moteur lorsque trois critères prédéterminés sont remplis, et un système mécanique de type « blade shedding ». Le giravion comporte au moins un rotor, le giravion comprenant au moins un moteur, le moteur entraînant une chaîne de transmission de puissance reliée au rotor.

En outre, le giravion comporte au moins un système de sécurité en survitesse du type décrit précédemment, chaque système de sécurité en survitesse étant relié à un moteur.

Par exemple, chaque moteur est associé à un système de sécurité en survitesse.

L'invention et ses avantages apparaîtront avec plus de détails dans le cadre de la description qui suit avec des exemples donnés à titre illustratif en référence aux figures annexées qui représentent :
- la figure 1 un giravion muni d'un unique moteur, et
- la figure 2, un giravion muni de deux moteurs.

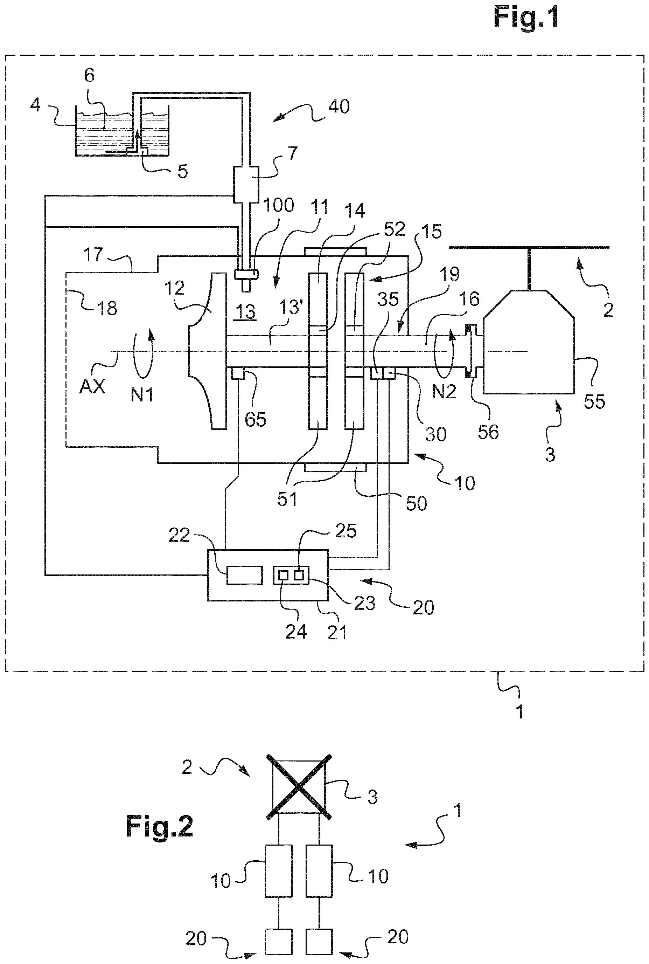

La figure 1 présente un aéronef 1, en particulier un giravion. Les organes de l'aéronef qui ne sont pas directement concernés par l'invention ne sont pas représentés sur la figure pour ne pas alourdir inutilement cette figure

En particulier, cet aéronef 1 est un giravion comportant un rotor 2 de sustentation et/ ou de propulsion. Ce rotor 2 est entraîné en rotation par une installation motrice comprenant au moins un moteur 10 et une chaîne de transmission de puissance 3. Une telle chaîne de transmission de puissance 3 comprend par exemple une roue libre 56 et une boîte de transmission de puissance 55. La boîte de transmission de puissance 55 est munie d'un mât entraînant un moyeu du rotor 2.

Dès lors, au moins un moteur 10 est mécaniquement lié à cette chaîne de transmission de puissance 3

Le moteur 10 du giravion est en particulier un turbomoteur.

Dès lors, le moteur 10 comprend un générateur de gaz 11. Le générateur de gaz 11 est classiquement muni d'au moins un compresseur 12, d'une chambre de combustion 13 et d'au moins une turbine de détente 14. La turbine de détente 14 est reliée rigidement au compresseur 12 par un arbre dit «arbre moteur 13' ».

La figure 1 présente un unique compresseur 12 et une unique turbine de détente 14. Néanmoins, le nombre de compresseur(s), et de turbine(s) de détente peut être optimisé selon les besoins, et ne restreint aucunement la portée de l'invention.

De plus, le compresseur 12, la turbine de détente 14 et l'arbre moteur 13' sont aptes à effectuer conjointement un mouvement rotatif autour d'un axe longitudinal AX du moteur 10. Plus précisément, le compresseur 12, la turbine de détente 14 et l'arbre moteur 13' sont solidaires en rotation autour de cet axe longitudinal.

La vitesse de rotation du générateur de gaz doit donc être entendue comme étant la vitesse dite « première vitesse de rotation N1 » de l'ensemble tournant du générateur de gaz qui comporte le compresseur 12 ainsi que la turbine de détente 14 et l'arbre moteur 13'.

Par ailleurs, le moteur 10 comporte un ensemble de puissance 19 situé en aval du générateur de gaz. L'ensemble de puissance est mis en mouvement par les gaz générés par le générateur de gaz.

L'ensemble de puissance 19 comporte au moins une turbine de puissance 15 située en aval du générateur de gaz. Le terme « aval » est à considérer en prenant en considération le sens d'écoulement des gaz au sein du moteur 10.

Cette turbine de puissance peut être liée au générateur de gaz. Toutefois, la turbine de puissance est une turbine libre indépendante de ce générateur de gaz selon la figure 1.

Dès lors, la turbine de puissance 15 est solidaire d'un arbre de puissance 16 relié à la chaîne de transmission de puissance 3. Classiquement, la chaîne de transmission de puissance 3 est fixée à l'arbre de puissance par un organe non représenté autorisant des désalignements angulaires et axiaux.

La figure 1 présente un ensemble de puissance 19 incluant une unique turbine de puissance 15. Néanmoins, le nombre de turbine(s) de puissance peut être optimisé selon les besoins, et ne restreint aucunement la portée de l'invention.

Les gaz sortant du générateur de gaz mettent alors en rotation l'ensemble de puissance du moteur à une vitesse de rotation dite « deuxième vitesse de rotation N2 ».

Par ailleurs, le giravion comporte au moins un réservoir 4 de carburant 6 pour alimenter en carburant la chambre de combustion 13.

Dès lors, une ligne d'alimentation en carburant munie d'au moins une pompe 5 et d'un doseur 7 relie le réservoir 4 à la chambre de combustion 13. Le moteur peut en outre comporter un robinet 100 sur une conduite interne de carburant.

Le giravion est en outre muni d'un système de sécurité en survitesse 20 pour éviter une survitesse du moteur 10.

Ce système de sécurité en survitesse 20 comporte une unité de traitement 21.

L'unité de traitement peut comprendre un circuit logique ou équivalent.

Selon la variante de la figure 1, l'unité de traitement 21 est par exemple munie d'un dispositif de stockage 23 et d'un calculateur 22. Le calculateur peut par exemple comprendre un processeur ou équivalent exécutant des instructions mémorisées sur le dispositif de stockage en appliquant le procédé selon l'invention. Ce dispositif de stockage peut inclure une mémoire non volatile mémorisant de telles instructions et une mémoire volatile mémorisant des valeurs de paramètres par exemple.

L'unité de traitement 21 peut être une partie intégrante d'un système de contrôle d'un turbomoteur, tel qu'un système connu sous l'acronyme ECU signifiant « Engine Control Unit » en langue anglaise ou sous l'acronyme FADEC. Dès lors, le calculateur de l'unité de traitement est le calculateur du système de contrôle, le dispositif de stockage étant le dispositif de stockage de ce système de contrôle.

L'unité de traitement 21 est reliée par des connections filaires et/ou non filaires à un capteur de vitesse dit « premier capteur de vitesse 65 ». Le premier capteur de vitesse 65 est agencé sur le générateur de gaz pour mesurer la première vitesse de rotation N1 du générateur de gaz.

Dès lors, le premier capteur de vitesse 65 transmet à l'unité de traitement un signal porteur de la première vitesse de rotation N1.

L'unité de traitement 21 est aussi reliée par des connections filaires et/ou non filaires à un capteur de vitesse dit « deuxième capteur de vitesse 30 ». Le deuxième capteur de vitesse 30 est agencé sur l'ensemble de puissance pour mesurer la deuxième vitesse de rotation N2 de cet ensemble de puissance.

Dès lors, le deuxième capteur de vitesse 30 transmet à l'unité de traitement un signal porteur de la deuxième vitesse de rotation N2.

En outre, l'unité de traitement 21 est aussi reliée par des connections filaires et/ou non filaires à un système de mesure d'un couple 35.

Ce système de mesure d'un couple 35 est agencé sur l'ensemble de puissance pour mesurer le couple Tq exercé sur l'ensemble de puissance 19.

Dès lors, le système de mesure d'un couple 35 transmet à l'unité de traitement un signal porteur du couple transmis par l'ensemble de puissance à la chaîne de transmission de puissance.

Par ailleurs, l'unité de traitement 21 est reliée à un système de coupure 40 apte à arrêter le moteur 10. Ce système de coupure comporte le doseur 7 et/ ou le robinet 100 alimentant en carburant le moteur 10.

Dès lors, selon le procédé appliqué, l'unité de traitement sollicite le système de coupure 40 pour arrêter le moteur 10 lorsque :
- le couple Tq transmis par l'ensemble de puissance 19 est inférieur à un seuil de couple Tq1 prédéterminé, tel qu'un seuil de couple Tq1 de l'ordre de 5% à 10 % du couple obtenu lorsque le moteur développe une puissance connue sous l'expression « puissance maximale au décollage PMD » par exemple, et
- la première vitesse de rotation N1 dut générateur de gaz est supérieure à un premier seuil de vitesse S1, tel qu'un premier seuil de vitesse S1 de l'ordre de 70 % à 75 % d'une vitesse de rotation nominale du générateur de gaz obtenue lorsque le moteur développe la puissance maximale au décollage PMD par exemple, et
- la deuxième vitesse de rotation N2 de l'ensemble de puissance est supérieure à un deuxième seuil de vitesse S2, tel qu'un deuxième seuil de vitesse S1 de l'ordre de 120% à 125 % de la vitesse de rotation nominale de l'ensemble de puissance par exemple.

En effet, le rotor de sustentation est mu en rotation à une vitesse nominale, cette vitesse nominale induisant une vitesse de rotation nominale de l'ensemble de puissance connue de l'homme du métier.

Par suite, lorsque les trois critères précédemment décrits sont simultanément remplis, le système de coupure permet d'arrêter le mouvement rotatif de l'ensemble de puissance 19 et du générateur de gaz 11.

En cas de crash, les risques d'inflammation de l'huile à partir d'un gaz chaud s'échappant indument du moteur sont alors réduits.

Le cas échéant, chaque pompe 5 est aussi coupée.

Outre un système électronique, le système de sécurité en survitesse peut comporter un système mécanique de type « blade shedding ».

Dès lors, chaque aube 51 de la turbine de puissance 15 peut être fixée à un moyeu par un organe fusible 52. Cet organe fusible est dimensionné pour rompre en cas de survitesse.

Selon l'exemple représenté, chaque aube est fixée à l'arbre de puissance par un organe fusible.

De plus, le système de sécurité en survitesse comporte un anneau 50 de blindage pour contenir les aubes à l'intérieur du moteur 10.

L'invention s'applique à un giravion muni d'un unique moteur 10 conformément à la réalisation de la figure 1.

Néanmoins, l'invention s'applique aussi un giravion comprenant plusieurs moteurs 10 conformément à la réalisation de la figure 2.

Dès lors, au moins un moteur 10 est muni d'un système de sécurité en survitesse 20. De préférence, chaque moteur 10 comporte ce système de sécurité en survitesse 20.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour arrêter un moteur (10) de giravion (1) en survitesse, ledit giravion (1) comprenant au moins un moteur (10), ledit moteur (10) comprenant un générateur de gaz (11) et un ensemble de puissance (19), ledit ensemble de puissance (19) ayant au moins une turbine de puissance (15) mise en rotation par des gaz provenant du générateur de gaz (11), ledit ensemble de puissance (19) ayant au moins un arbre de puissance (16) solidaire en rotation de la turbine de puissance (15),
**caractérisé en ce que** lorsque ledit moteur (10) est en fonctionnement, on arrête automatiquement ledit moteur (10) lorsque les trois conditions suivantes sont simultanément remplies :
- un couple (Tq) mesuré sur ledit ensemble de puissance (19) est inférieur à un seuil de couple (Tq1) prédéterminé, et
- une vitesse de rotation dite « première vitesse de rotation (N1) » dudit générateur de gaz (11) est supérieure à un seuil dit « premier seuil de vitesse (S1) », et
- une vitesse de rotation dite « deuxième vitesse de rotation (N2) » dudit ensemble de puissance (19) est supérieure à un seuil dit « deuxième seuil de vitesse (S2) ».

2. Procédé selon la revendication 1,
**caractérisé en ce que**, ledit générateur de gaz (11) étant alimenté par un doseur (7) de carburant, ledit doseur pouvant être réglé entre une butée minimale induisant un débit minimal de carburant et une butée maximale induisant un débit maximal de carburant, on arrête automatiquement ledit moteur (10) en réglant ledit doseur (7) de carburant du moteur (10) sur sa butée minimale.

3. Procédé selon l'une quelconque des revendications 1 à 2, **caractérisé en ce qu'**au moins un moteur (10) comprenant un robinet (100) sur une conduite de carburant, on coupe automatiquement ledit moteur en fermant ledit robinet (100).

4. Procédé selon l'une quelconque des revendications 1 à 3, **caractérisé en ce que** chaque moteur (10) étant alimenté en carburant par au moins une pompe (5), on coupe ladite pompe (5) lorsque lesdites trois conditions sont simultanément remplies.

5. Procédé selon l'une quelconque des revendications 1 à 4,
**caractérisé en ce qu'**on mesure ledit couple (Tq) en agençant un système de mesure d'un couple (35) sur ledit arbre de puissance (16).

6. Giravion (1) comportant au moins un rotor (2), ledit giravion (1) comprenant au moins un moteur (10), ledit moteur (10) entraînant une chaîne de transmission de puissance (3) reliée audit rotor (2), ledit giravion (1) comportant au moins un système de sécurité en survitesse (20) pour un moteur (10), ledit moteur (10) comprenant un générateur de gaz (11) et un ensemble de puissance (19), ledit ensemble de puissance (19) ayant au moins une turbine de puissance (15) mise en rotation par ledit générateur de gaz (11), ledit ensemble de puissance (19) ayant au moins un arbre de puissance (16) solidaire en rotation de la turbine de puissance (15), ledit système de sécurité en survitesse (20) comprenant un système de coupure (40) pour arrêter le fonctionnement dudit moteur (10), ledit système de sécurité en survitesse (20) comprenant une unité de traitement (21) reliée au système de coupure (40), ledit système de sécurité en survitesse (20) comprenant un capteur de vitesse dit « premier capteur de vitesse (65) » pour mesurer une vitesse de rotation dite « première vitesse de rotation » dudit générateur de gaz, ledit système de sécurité en survitesse comportant un capteur de vitesse dit « deuxième capteur de vitesse (30) » pour mesurer une vitesse de rotation dite « deuxième vitesse de rotation (N2) » dudit ensemble de puissance (19), ledit système de sécurité en survitesse (20) comportant un système de mesure d'un couple (35) pour mesurer un couple (Tq) transmis par ledit ensemble de puissance (19),
**caractérisé en ce que** chaque système de sécurité en survitesse (20) étant relié à un moteur (10), ladite unité de traitement (21) est reliée au premier capteur de vitesse (65) ainsi qu'au deuxième capteur de vitesse (30) et au système de mesure d'un couple (35) et étant configuré pour mettre en oeuvre le procédé selon l'une quelconque des revendications 1 à 5 en arrêtant automatiquement ledit moteur (10) lorsque les trois conditions suivantes sont simultanément remplies :
- un couple (Tq) transmis par ledit ensemble de puissance (19) est inférieur à un seuil de couple (Tq1) prédéterminé, et
- une vitesse de rotation dite « première vitesse de rotation (N1) » dudit générateur de gaz est supérieure à un seuil dit « premier seuil de vitesse (S1) », et
une vitesse de rotation dite « deuxième vitesse de rotation (N2) » dudit ensemble de puissance est supérieure à un seuil dit « deuxième seuil de vitesse (S2) »..

7. Giravion (1) selon la revendication 6,
**caractérisé en ce que** ledit système de coupure (40) comporte un doseur (7) de carburant acheminant du carburant vers le générateur de gaz (11).

8. Giravion (1) selon l'une quelconque des revendications 6 à 7,
**caractérisé en ce que** ledit système de coupure (40) comporte au moins une pompe (5) acheminant du carburant vers ledit générateur de gaz (11).

9. Giravion (1) selon l'une quelconque des revendications 6 à 8,
**caractérisé en ce que** ledit système de sécurité en survitesse (20) comporte un anneau (50) de blindage entourant ladite turbine de puissance (15), ladite turbine de puissance (15) comporte une pluralité d'aubes (51), chaque aube (51) étant fixée à un organe fusible (52).

10. Giravion (1) selon l'une quelconque des revendications 6 à 9,
**caractérisé en ce que** ladite unité de traitement (21) est un FADEC dudit moteur (10).

## Patentansprüche

1. Verfahren zum Anhalten eines Motors (10) eines Drehflügelflugzeugs (1) beim Überdrehen, wobei das Drehflügelflugzeug (1) mindestens einen Motor (10) aufweist, wobei der Motor (10) einen Gasgenerator (11) und eine Leistungseinheit (19) aufweist, wobei die Leistungseinheit (19) mindestens eine Leistungsturbine (15) aufweist, die durch die Gase, die von dem Gasgenerator (11) kommen, in eine Drehbewegung versetzt wird, wobei die Leistungseinheit (19) mindestens eine Kraftübertragungswelle (16) aufweist, die mit der Leistungsturbine (15) drehfest verbunden ist,
**dadurch gekennzeichnet, dass**, wenn der Motor (10) in Betrieb ist, der Motor (10) automatisch angehalten wird, wenn die folgenden drei Bedingungen gleichzeitig erfüllt sind:
- ein an der Leistungseinheit (19) gemessenes Drehmoment (Tq) kleiner als ein vorbestimmter Drehmomentschwellenwert (Tq1) ist, und
- eine "erste Drehgeschwindigkeit (N1)" genannte Drehgeschwindigkeit des Gasgenerators (11) größer ist als ein "erster Drehgeschwindigkeitsschwellenwert (S1)" genannter Schwellenwert ist, und
- eine "zweite Drehgeschwindigkeit (N2)" genannte Drehgeschwindigkeit der Leistungseinheit (19) größer ist als ein "zweiter Drehgeschwindigkeitsschwellenwert (S2)" genannter Schwellenwert.

2. Verfahren nach Anspruch 1,
**dadurch gekennzeichnet, dass** der Gasgenerator (11) von einem Kraftstoffdosierer (7) gespeist wird, wobei der Dosierer zwischen einem minimalen Grenzwert, der zu einem minimalen Kraftstoffdurchsatz führt, und einem maximalen Grenzwert, der zu einem maximalen Kraftstoffdurchsatz führt, geregelt werden kann, wobei der Motor (10) automatisch angehalten wird durch Einstellen des Kraftstoffdosierers (7) des Motors (10) auf den minimalen Grenzwert.

3. Verfahren nach einem der Ansprüche 1 bis 2,
**dadurch gekennzeichnet, dass** bei mindestens einem Motor (10) mit einem Schließhahn (100) in der Kraftstoffleitung der Motor automatisch durch Schließen des Schließhahns (100) abgeschaltet wird.

4. Verfahren nach einem der Ansprüche 1 bis 3,
**dadurch gekennzeichnet, dass** jeder Motor (10) durch mindestens eine Pumpe (5) mit Kraftstoff gespeist wird, wobei die Pumpe (5) abgeschaltet wird, wenn die drei Bedingungen gleichzeitig erfüllt sind.

5. Verfahren nach einem der Ansprüche 1 bis 4,
**dadurch gekennzeichnet, dass** das Drehmoment (Tq) gemessen wird, indem ein System zum Messen eines Drehmoments (35) auf der Kraftübertragungswelle (16) angeordnet wird.

6. Drehflügelflugzeug (1) mit mindestens einem Rotor (2), wobei das Drehflügelflugzeug (1) mindestens einen Motor (10) aufweist, wobei der Motor (10) eine mit dem Rotor (2) verbundene Kraftübertragungskette antreibt, wobei das Drehflügelflugzeug (1) mindestens ein Sicherheitssystem (20) gegen Überdrehen für einen Motor (10) aufweist, wobei der Motor (10) einen Gasgenerator (11) und eine Leistungseinheit (19) aufweist, wobei die Leistungseinheit (19) mindestens eine Leistungsturbine (15) aufweist, die durch den Gasgenerator (11) in eine Drehbewegung versetzt wird, wobei die Leistungseinheit (19) mindestens eine Kraftübertragungswelle (16) aufweist, die drehfest mit der Leistungsturbine (15) verbunden ist, wobei das Sicherheitssystem (20) gegen Überdrehen ein Abschaltsystem (40) aufweist, zum Anhalten des Betriebs des Motors (10), wobei das Sicherheitssystem (20) gegen Überdrehen eine Verarbeitungseinheit (21) aufweist, die mit dem Abschaltsystem (40) verbunden ist, wobei das Sicherheitssystem (20) gegen Überdrehen einen "erster Drehgeschwindigkeitsdetektor (65)" genannten Drehgeschwindigkeitsdetektor aufweist zum Messen einer "erste Drehgeschwindigkeit" genannten Drehgeschwindigkeit des Gasgenerators, wobei das Sicherheitssystem gegen Überdrehen einen "zweiter Drehgeschwindigkeitsdetektor (30)" genannten Drehgeschwindigkeitsdetektor aufweist zum Messen einer "zweite Drehgeschwindigkeit (N2)" genannten Drehgeschwindigkeit der Leistungseinheit (19), wobei das Sicherheitssystem (20) gegen Überdrehen ein System (35) zur Messung eines Drehmoments aufweist zum Messen eines Drehmoments (Tq), das von der Leistungseinheit (19) übertragen wird,
**dadurch gekennzeichnet, dass** jedes Sicherheitssystem (20) gegen Überdrehen mit einem Motor (10) verbunden ist, wobei die Verarbeitungseinheit (21) mit dem ersten Drehgeschwindigkeitsdetektor (65) sowie mit dem zweiten Drehgeschwindigkeitsdetektor (30) und mit dem System (35) zum Messen eines Drehmoments verbunden ist und ausgebildet ist, um das Verfahren nach einem der Ansprüche 1 bis 5 auszuführen, indem der Motor (10) automatisch angehalten wird, wenn die drei folgenden Bedingungen gleichzeitig erfüllt sind:
- ein von der Leistungseinheit (19) übertragenes Drehmoment (Tq) kleiner ist als ein vorbestimmter Drehmomentschwellenwert (Tq1) und
- eine "erste Drehgeschwindigkeit (N1)" genannte Drehgeschwindigkeit des Gasgenerators größer ist als ein "erster Drehgeschwindigkeitsschwellenwert (S1)" genannter Schwellenwert, und
eine "zweite Drehgeschwindigkeit (N2)" genannte Drehgeschwindigkeit der Leistungseinheit größer ist als ein "zweiter Drehgeschwindigkeitsschwellenwert (S2)" genannter Schwellenwert.

7. Drehflügelflugzeug (1) nach Anspruch 6,
**dadurch gekennzeichnet, dass** das Abschaltsystem (40) einen Kraftstoffdosierer (7) aufweist, der den Kraftstoff zu dem Gasgenerator (11) weiterleitet.

8. Drehflügelflugzeug (1) nach einem der Ansprüche 6 bis 7,
**dadurch gekennzeichnet, dass** das Abschaltsystem (40) mindestens eine Pumpe (5) aufweist, die den Kraftstoff zu dem Gasgenerator (11) weiterleitet.

9. Drehflügelflugzeug (1) nach einem der Ansprüche 6 bis 8,
**dadurch gekennzeichnet, dass** das Sicherheitssystem (20) gegen Überdrehen einen Abschirmring (50) aufweist, der die Leistungsturbine (15) umgibt, wobei die Leistungsturbine (15) eine Mehrzahl von Turbinenschaufeln (51) aufweist, wobei jede Turbinenschaufel (51) an einem Sicherungselement (52) befestigt ist.

10. Drehflügelflugzeug (1) nach einem der Ansprüche 6 bis 9,
**dadurch gekennzeichnet, dass** die Verarbeitungseinheit (21) eine FADEC-Steuerung (Full Authority Digital Engine Control) des Motors (10) ist.

## Claims

1. Method of stopping an engine (10) of a rotorcraft (1) in overspeed, said rotorcraft (1) comprising at least one engine (10), said engine (10) comprising a gas generator (11) and a power assembly (19), said power assembly (19) having at least one power turbine (15) set in rotation by gases coming from the gas generator (11), said power assembly (19) having at least one power shaft (16) connected to the power turbine (15) in such a way as to rotate therewith,
**characterized in that**, when said engine (10) is in operation, said engine (10) is stopped automatically when the following three conditions are satisfied simultaneously:
- a torque (Tq) measured on said power assembly (19) is below a predetermined torque threshold (Tq1), and
- a speed of rotation, referred to as "first speed of rotation (N1)", of said gas generator (11) is above a threshold referred to as "first speed threshold (S1)", and
- a speed of rotation, referred to as "second speed of rotation (N2)", of said power assembly (19) is above a threshold referred to as "second speed threshold (S2)".

2. Method according to claim 1,
**characterized in that**, said gas generator (11) being fed by a fuel metering device (7), said metering device being able to be adjusted between a minimum limit inducing a minimum fuel flow rate and a maximum limit inducing a maximum fuel flow rate, said engine (10) is stopped automatically by adjusting said fuel metering device (7) for the engine (10) to its minimum limit.

3. Method according to any one of claims 1 to 2,
**characterized in that**, at least one engine (10) comprising a cock (100) on a fuel pipe, said engine is switched off automatically by closing said cock (100).

4. Method according to any one of claims 1 to 3,
**characterized in that**, each engine (10) being fed with fuel by at least one pump (5), said pump (5) is switched off when said three conditions are satisfied simultaneously.

5. Method according to any one of claims 1 to 4,
**characterized in that** said torque (Tq) is measured by disposing a torque measuring system (35) on said power shaft (16).

6. Rotorcraft (1) comprising at least one rotor (2), said rotorcraft (1) comprising at least one engine (10), said engine (10) driving a power transmission train (3) connected to said rotor (2), said rotorcraft (1) comprising at least one overspeed safety system (20) for an engine (10), said engine (10) comprising a gas generator (11) and a power assembly (19), said power assembly (19) having at least one power turbine (15) set in rotation by said gas generator (11), said power assembly (19) having at least one power shaft (16) connected to the power turbine (15) in such a way as to rotate therewith, said overspeed safety system (20) comprising a switch-off system (40) for stopping operation of said engine (10), said overspeed safety system (20) comprising a processing unit (21) connected to the switch-off system (40), said overspeed safety system (20) comprising a speed sensor, referred to as "first speed sensor (65)", for measuring a speed of rotation, referred to as "first speed of rotation", of said gas generator, said overspeed safety system comprising a speed sensor, referred to as "second speed sensor (30)", for measuring a speed of rotation, referred to as "second speed of rotation (N2)", of said power assembly (19), said overspeed safety system (20) comprising a torque measuring system (35) for measuring a torque (Tq) transmitted by said power assembly (19),
**characterized in that**, each overspeed safety system (20) being connected to an engine (10), said processing unit (21) is connected to the first speed sensor (65) as well as to the second speed sensor (30) and to the torque measuring system (35), and being configured to implement the method according to any one of claims 1 to 5 by automatically stopping said engine (10) when the following three conditions are satisfied simultaneously:
- a torque (Tq) transmitted by said power assembly (19) is below a predetermined torque threshold (Tq1), and
- a speed of rotation, referred to as "first speed of rotation (N1)", of said gas generator is above a threshold referred to as "first speed threshold (S1)", and
- a speed of rotation, referred to as "second speed of rotation (N2)", of said power assembly is above a threshold referred to as "second speed threshold (S2)".

7. Rotorcraft (1) according to claim 6,
**characterized in that** said switch-off system (40) comprises a fuel metering device (7) which conveys fuel to the gas generator (11).

8. Rotorcraft (1) according to any one of claims 6 to 7,
**characterized in that** said switch-off system (40) comprises at least one pump (5) which conveys fuel to said gas generator (11).

9. Rotorcraft (1) according to any one of claims 6 to 8,
**characterized in that** said overspeed safety system (20) comprises a shield ring (50) surrounding said power turbine (15), said power turbine (15) comprises a plurality of blades (51), each blade (51) being fastened to a fusible element (52).

10. Rotorcraft (1) according to any one of claims 6 to 9,
**characterized in that** said processing unit (21) is a FADEC of said engine (10).
